# EUROPÄISCHE PATENTSCHRIFT

(11) **EP 3 441 245 B1**
(45) Veröffentlichungstag und Bekanntmachung des Hinweises auf die Patenterteilung: **18.03.2020**
(21) Anmeldenummer: 18187260.7
(22) Anmeldetag: 03.08.2018
(51) Int. Cl.: B60H 1/34, F24F 13/06, F24F 13/078

(54) **BELÜFTUNGSEINRICHTUNG**
VENTILATION DEVICE
DISPOSITIF D'AÉRATION

(30) Priorität: 10.08.2017 DE 102017118229
(43) Veröffentlichungstag der Anmeldung: 13.02.2019
(73) Patentinhaber: Dr. Schneider Kunststoffwerke GmbH, 96317 Kronach (DE)
(72) Erfinder: ENDRES, Gerhard, 95336 Mainleus (DE)

(56) Entgegenhaltungen:
- WO-A1-2004/067302
- GB-A- 2 346 960
- JP-A- 2004 203 176

## Beschreibung

Es wird eine Belüftungseinrichtung beschrieben, welche Flächenelemente aufweist, die in einer ersten Stellung aneinander anliegen, um eine geschlossene Oberfläche bereitzustellen, und in einer zweiten Stellung beabstandet zueinander angeordnet sind, um Luftaustrittsöffnungen zu bilden. Gattungsgemäße Belüftungseinrichtungen sind in der Regel dazu vorgesehen, eine diffuse Belüftung bereitzustellen. Bei einer diffusen Belüftung erfolgt das Ausgeben eines Luftstroms ohne eine gerichtete Luftablenkung, wie dies beispielsweise über steuerbare Luftausströmer möglich ist.

Über derartige Belüftungseinrichtungen soll in der Regel lediglich eine Luftzufuhr erfolgen.

### Stand der Technik

Belüftungseinrichtungen werden beispielsweise bei Fahrzeugen dazu verwendet, um Frischluft, temperierte Luft und/oder klimatisierte Luft in den Fahrgastraum eines Fahrzeugs zu bringen. Fahrzeug können beispielsweise Kraftfahrzeuge wie Pkw, Lkw oder Busse, Züge, Flugzeuge oder Schiffe sein. Zusätzlich zur Regelung der Temperatur, Luftfeuchtigkeit und Schadstoffbelastung von ausgegebener Luft kann auch die Menge an ausgegebener Luft geregelt werden. Hierzu ist eine Steuereinrichtung vorgesehen, welche die Menge der zugeführten Luft regelt. Solche Belüftungseinrichtungen können an verschiedenen Positionen in einem Fahrzeug vorgesehen sein.

Belüftungseinrichtungen mit einer Oberfläche, welche geöffnet und geschlossen werden kann, um Luftaustrittsöffnungen zu bilden, weisen im Stand der Technik verschwenk- oder verdrehbar gelagerte Lamellen oder Walzenkörper auf. Solche Belüftungseinrichtungen sind in der Regel zusätzlich dazu ausgebildet, eine Luftablenkung zu erreichen. Diese Belüftungseinrichtungen weisen daher keine Oberfläche auf, die für eine diffuse Belüftung partiell geöffnet wird.

Darüber hinaus sind flexible Flächenelemente bekannt, die aus einer Vielzahl von miteinander verknüpften Elementen bestehen. Die Elemente können auseinandergezogen werden, um dazwischen Öffnungen auszubilden. Derartige Flächenelemente weisen jedoch den Nachteil auf, dass diese nur im generativen Fertigungsverfahren herstellbar sind. Generative Fertigungsverfahren umfassen beispielsweise das sogenannte 3D-Drucken bzw. 3D-Printing.

Derartige Fertigungsverfahren sind jedoch sehr aufwendig und ermöglichen es daher nur geringe Stückzahlen in einem bestimmten Zeitabschnitt herzustellen. Aufgrund der komplexen Fertigungsverfahren sind dadurch hergestellte Teile auch sehr teuer.

Weiterhin ist aus DE 10 2013 220 966 A1 ein Luftströmungsauslass mit einer Mehrzahl von Auslasseinheiten bekannt, die eine Luftströmungseinheit, ein Kugelgelenk und ein Verbindungselement aufweisen. Ferner sind eine Stellknopfeinheit mit einem Stellknopf, der mit einem Kugelgelenk gekoppelt ist, und ein Verbindungsmechanismus vorgesehen, der das Kugelgelenk einer jeden der Auslasseinheiten und das Kugelgelenk der Stellknopfeinheit miteinander koppelt. Eine auf die Stirnseite des Stellknopfs ausgeübte Kraft dient dazu, die jeweiligen Kugelgelenke einer jeden aus der Mehrzahl von Auslasseinheiten und das Kugelgelenk der Stellknopfeinheit gleichzeitig und aufeinander abgestimmt zu drehen, um die Luftströmungsrichtung einzustellen.

Darüber hinaus offenbart DE 10 2011 003 435 A1 ein Belüftungssystem für Fahrzeuginnenräume mit einem Luftkanal und einem Ausströmer mit einem Luftauslass, aus dem Luft aus dem Luftkanal in den Fahrzeuginnenraum strömbar ist, und einer den Luftfluss steuernden Einrichtung, wobei die Einrichtung wenigstens zwei separate Strömungskanäle aufweist, die einerseits mit dem Luftkanal und andererseits mit dem Luftauslass in Fluidverbindung stehen. In oder an den Strömungskanälen ist jeweils eine Verschlusseinrichtung vorgesehen, über die der jeweilige Strömungskanal verschließbar ist, wobei die Verschlusseinrichtungen separat voneinander verstellbar sind.

In der JP 2004 203 176 A wird ein Ausströmer für Fahrzeuge offenbart, dessen schwenkbar an der Luftauslassöffnung angeordnete Lamellen stets parallel zueinander verschwenkbar sind. Der Schwenkbereich dieser Lamellen ist so gewählt, dass diese in einer Extremstellung die Luftauslassöffnung verschließen können.

Die WO 2004 / 067 302 A1 offenbart einen Ausströmer für ein Fahrzeug, welcher ein Stellelement für die austretende Luftströmung aufweist. Das Stellelement besitzt einen temperaturinduzierten Formänderungseffekt. Über Mittel im Ausströmer, welche diesen Formänderungseffekt hervorrufen, lässt sich das Stellelement wölben, was zu einer Veränderung der Luftströmungsrichtung führt.

GB 2 346 960 A offenbart eine Luftströmungssteuerungsanordnung für Fahrzeuge, aufweisend elektrostatisch aufladbare, flexibel verformbare Luftklappen. Durch Aufladen der Luftklappen mit gleicher Ladung stoßen diese sich voneinander ab und vollführen eine Bewegung zueinander, wodurch der Strömungskanal freigegeben wird.

### Aufgabe

Demgegenüber besteht die Aufgabe der Erfindung darin, eine Belüftungseinrichtung anzugeben, welche in einem konventionellen Fertigungsverfahren herstellbar ist und einen einfachen Aufbau aufweist, der auch eine Bereitstellung von Belüftungseinrichtungen mit gekrümmten Oberflächen erlaubt.

Die Aufgabe wird erfindungsgemäß durch eine Belüftungseinrichtung gelöst, welche Flächenelemente aufweist, die einer ersten Stellung aneinander anliegen, um eine geschlossene Oberfläche bereitzustellen, und in einer zweiten Stellung beabstandet zueinander angeordnet sind, um Luftaustrittsöffnungen zu bilden, wobei
- die Flächenelemente über flexible Verbindungselemente miteinander verbunden sind,
- die Flächenelemente, welche an den Rändern angeordnet sind, mit Einstellmitteln verbunden sind, und
- die Einstellmittel derart beweglich ausgebildet und angeordnet sind, dass über die Einstellmittel sämtliche Flächenelemente in die zweite Stellung bringbar sind.

Über die flexiblen Verbindungselemente können die Flächenelemente daher auseinander gezogen werden, um beispielsweise Luftaustrittsöffnungen dazwischen zu bilden. Wird kein Zug auf die Flächenelemente aufgebracht, so werden diese über die flexiblen Verbindungselemente aneinander anliegend zusammengehalten. Die flexiblen Verbindungselemente sind direkt mit den Flächenelementen verbunden. Die Flächenelemente mit den flexiblen Verbindungselementen können daher beispielsweise in einem Spritzgussprozess hergestellt werden. Die flexible Ausbildung wird durch Wahl eines entsprechenden Kunststoffs erreicht. Die Belüftungseinrichtung kann beispielsweise verschiedene Formen annehmen, da die flexiblen Verbindungselemente und die Flächenelemente, welche vorzugsweise aus dem gleichen Material wie die flexiblen Verbindungselemente bestehen, beliebig verformbar sind.

Die Einstellmittel wirken mit den Flächenelementen an den Rändern zusammen, wobei ein Zug auf die äußeren Flächenelemente an den Rändern automatisch sämtliche Flächenelemente in der gleichen Richtung auseinander zieht. Der Verbund aus Flächenelementen kann verschiedene Oberflächenformen annehmen.

Beispielsweise kann auch ein Einstellmittel vorgesehen sein, welches einen Zug in einer Richtung auf die Flächenelemente ausübt. Die Ausbildung von Luftaustrittsöffnungen erfolgt daher in dieser Richtung. Die Flächenelemente können in Summe verschiedene Oberflächenstrukturen ausbilden, wobei beispielsweise im Wesentlichen runde, polygonale, rechteckige oder dreieckige Formen bereitgestellt werden. Entsprechend können dann zwei oder mehrere Einstellmittel vorgesehen sein, welche jeweils an einem Rand auf die Flächenelemente wirken. Vorzugsweise sind zwei Paare von Einstellmitteln vorgesehen, welche an gegenüberliegenden Randbereichen auf die Flächenelemente einwirken, um ein definiertes Auseinanderziehen der Flächenelemente zu erreichen. Werden die Einstellmittel zurück in ihre Ausgangsstellung verbracht, gelangen ebenfalls die Flächenelemente in ihre Ausgangsstellung und liegen aneinander an, wobei die flexiblen Verbindungselemente ein Zusammenziehen der Flächenelemente unterstützen.

Die Flächenelemente können an ihrer Rückseite, der Oberfläche abgewandt, zweite flexible Elemente aufweisen, die mit einer Trägerplatte verbunden sind. Die Trägerplatte kann beispielsweise verschiedene Formen aufweisen. Die Trägerplatte gibt dabei die Oberflächenform bzw. den Oberflächenverlauf der Flächenelemente vor. Die Trägerplatte ist hierzu vorzugsweise fest ausgebildet und kann nicht verformt werden. Die zweiten flexiblen Elemente sind an einem Ende mit der Trägerplatte und an dem gegenüberliegenden Ende mit einem Basisabschnitt der Flächenelemente verbunden. Da die zweiten Elemente ebenfalls flexibel ausgebildet sind, können diese bei einer Verlagerung der Flächenelemente über die Einstellmittel verdreht oder verschwenkt werden.

Die Trägerplatte kann hierzu erste Öffnungen für die zweiten flexiblen Elemente und zweite Öffnungen für durchströmende Luft aufweisen. In die ersten Öffnungen werden beispielsweise Verbindungszapfen oder Verbindungspins der zweiten flexiblen Elemente eingesetzt. Hierüber sind die Flächenelemente mit der Trägerplatte verbunden. Über die zweiten Öffnungen gelangt ausströmende Luft zu den Flächenelementen, welche in der zweiten Stellung Luftaustrittsöffnungen ausbilden. In der ersten Stellung liegen die Flächenelemente aneinander an, sodass kein Luftaustritt möglich ist.

Die Einstellmittel können verschwenkbar gelagerte Lamellen oder verschiebbar gelagerte Leisten aufweisen, die über Antriebseinrichtungen verlagerbar sind. Unabhängig von der konkreten Ausbildung der Einstellmittel sind diese so ausgebildet und angeordnet, dass diese einen Zug auf die Flächenelemente ausüben können. Verschwenkbar gelagerte Lamellen können beispielsweise an einer Seite eines beispielsweise rechteckigen Flächenverbundes von Flächenelementen anliegen, wobei ein Verschwenken der Lamelle ein Auseinanderziehen der Flächenelemente bewirkt. Hierzu ist die Lamelle an ihrem der Schwenkachse abgewandten Teil mit den Flächenelementen verbunden. Die Lamelle kann beispielsweise mit einem Rotationskörper verbunden sein, der wiederum ein Verschwenken der Lamelle bewirkt. Ein Rotationskörper kann beispielsweise durch eine Gewindestange oder ein Schraube realisiert werden. Anstelle eines Verschwenkens kann auch eine verschiebbare Lagerung von Leisten vorgesehen sein. Die Leisten können beispielsweise über Schieber manuell oder motorisch über Schrauben, Hebeleinrichtungen oder Zahnstangen verschoben werden.

In sämtlichen Ausführungsformen können die Antriebseinrichtungen manuell und/oder motorisch antreibbar sein. Die Antriebseinrichtungen können beispielsweise Schrauben, Motoren, Stellantriebe, Hebelkinematiken und/oder Getriebe- und/oder Schneckenverbindungen aufweisen. Die Motoren können beispielsweise Elektromotoren sein und über ein Getriebe auf die weiteren Einstellmittel wirken. Die Ausbildung der Antriebseinrichtungen kann unterschiedlich sein. Wichtig ist, dass die Antriebseinrichtungen entweder eine Rotations- oder lineare Bewegung ausüben, welche die Einstellmittel entsprechend verlagern, um ein Auseinanderziehen der Flächenelemente zu erreichen. Nachdem keine Kraft oder kein Zug mehr auf die Flächenelemente wirkt, da entweder die Einstellmittel zurückverbracht worden sind oder automatisch nach Beendigung einer Auslenkung über die Antriebseinrichtung in ihre Ausgangsstellung zurückgekehrt sind, bewirken die flexiblen Verbindungselemente ein Zusammenziehen der Flächenelemente, bis diese aneinander anliegen. Über die Antriebseinrichtungen und die Einstellmittel können auch verschiedene Abstände zwischen den Flächenelementen in der zweiten Stellung eingestellt werden. Hierüber kann die Menge an ausströmender Luft beeinflusst werden.

Die Flächenelemente können an ihrer der Oberfläche zugewandten Seite ein gegenüber den flexiblen Verbindungselementen härteres Oberflächenelement aufweisen. Solche Oberflächenelemente können nicht verformt werden, sodass beim Auseinanderziehen der Flächenelemente die Oberflächenelemente selbst nicht verformt werden. Beim Auseinanderziehen der Flächenelemente kann aufgrund der flexiblen Ausgestaltung dieser auch eine Verformung der Flächenelemente selbst auftreten. Oberflächenelemente aus einem härteren Material werden jedoch beim Aufbringen einer Zugkraft auf die Flächenelemente nicht verformt. Zudem können die Oberflächenelemente sicherstellen, dass die darunter befindlichen Flächenelemente nicht verformt werden, wenn eine Kraft zum Auseinanderbringen der Flächenelemente aufgebracht wird, wobei die Verformung lediglich in den Verbindungselementen zwischen den Flächenelementen erfolgt.

Oberflächenelemente können beispielsweise aus verschiedenen Materialien bestehen. Beispielsweise können diese aus einem Kunststoff bestehen oder aber auch aus Holz, Metall oder Verbundstoffen. Die Flächenelemente können mit den Verbindungselementen und/oder den zweiten flexiblen Elementen in einem Spritzgussverfahren hergestellt sein. Die Herstellung einer Belüftungseinrichtung, wobei die Flächenelemente in einem Spritzgussverfahren hergestellt werden, ermöglicht eine kostengünstige, einfache Herstellung dieser in hoher Stückzahl. Die Flächenelemente werden als Verbund hergestellt, wobei diese über die Verbindungselemente bereits bei der Herstellung fest miteinander verbunden sind. Es gibt daher keine einzelnen Flächenelemente, die über Verbindungselemente erst verbunden werden müssen, sondern die Flächenelemente sind über die Verbindungselemente bereits bei der Herstellung zu einem Verbund zusammengefasst. Ein Spritzgießverfahren eignet sich besonders zur Herstellung eines solchen Verbundes, da der Kunststoff lediglich in eine Form eingebracht werden muss. In Abhängigkeit der Ausbildung des jeweils verwendeten Materials für die Flächenelemente und die Verbindungselemente lässt sich der Grad der Flexibilität bei der Herstellung einstellen. Spritzgießverfahren eignen sich insbesondere zur Herstellung von Teilen in hoher Stückzahl. Gegenüber generativen Fertigungsverfahren sind diese daher aus fertigungstechnischer und Kostensicht im Vorteil.

Die Oberflächenelemente können weiter auf die Flächenelemente in einem Zwei-Komponenten-Spritzgussverfahren, mittels eines Klebstoffs oder mittels Wärmeeintrag aufgebracht sein. Ein Aufbringen mittels Wärmeeintrag umfasst beispielsweise ein Verschweißen. Die Verbindung mittels Klebstoff erfolgt durch das Aufbringen eines Klebstoffs auf die Oberfläche der Flächenelemente und/oder der Oberflächenelemente und ein anschließendes Verbinden dieser. Bei einem Zwei-Komponenten-Spritzgussverfahren werden die Oberflächenelemente direkt auf den Flächenelementen in einer Kavität einer Spritzgussform aufgebracht, wobei für die verschiedenen Bestandteile unterschiedliche Kunststoffe verwendet werden. Für das Oberflächenelement wird ein härterer Kunststoff verwendet, der insbesondere keine flexiblen Eigenschaften aufweist.

Ein derartig hergestellter Verbund aus Flächenelementen mit Oberflächenelementen lässt sich daher kostengünstig in hoher Stückzahl in sehr kurzen Herstellzeiten bereitstellen. Bei der Herstellung eines Verbunds aus Flächenelemente können die Flächenelemente einen Abstand zueinander aufweisen. Dieser Abstand ergibt sich aus fertigungstechnischer Sicht, da die Flächenelemente beabstandet ausgebildet werden müssen. Wenn der Verbund dann aus der Form entnommen wird, weist der Verbund im Ruhezustand, also in einem nicht betätigten Zustand, Abstände zwischen den Flächenelementen auf. Das aneinander Anliegen der Flächenelemente wird deshalb auch über die Einstellmittel erreicht. Die Einstellmittel drücken hierzu die Flächenelemente gegeneinander, so dass kein Abstand zwischen diesen besteht.

Die Belüftungseinrichtung kann ferner mindestens eine Beleuchtungseinrichtung aufweisen, welche hinter oder unter den Flächenelementen angeordnet ist. In der ersten Stellung der Flächenelemente liegen diese aneinander an und stellen damit keine Luftdurchtrittsöffnungen bereit. Entsprechend erfolgt dann auch keine Beleuchtung durch die Luftaustrittsöffnungen. Befinden sich die Flächenelemente in der zweiten Stellung, so kann über die dazwischen gebildeten Luftaustrittsöffnungen auch eine Lichtausgabe erfolgen. In Abhängigkeit des Abstands zwischen den Flächenelementen gelangt daher mehr oder weniger Licht durch die Öffnungen zwischen den Flächenelementen nach außen. Bei einer Beleuchtung lassen sich auch ganz einfach die Öffnungsweite und damit die Menge an ausströmender Luft schnell und einfach erfassen. Die Beleuchtungseinrichtung kann beispielsweise eine Leuchtdiode oder Lichtleiter umfassen, die über eine Leuchtdiode angesteuert werden. Die Beleuchtung kann in Abhängigkeit der Temperatur der ausgegebenen Luft und der Menge der ausgegebenen Luft sowohl in der Farbe als auch in der Lichtstärke veränderbar sein. Zur Steuerung der Beleuchtungseinrichtung kann eine zentrale Steuereinheit verwendet werden, welche beispielsweise auch für die Einstellmittel zum Verbringen der Flächenelemente in die erste und in die zweite Stellung vorgesehen ist.

Um auch in der ersten Stellung eine gedämpfte Beleuchtung zu erreichen, können die Flächenelemente (Basis und/oder Oberflächenelemente) (teil-) transparent sein.

Die Flächenelemente selbst können eine hexagonale, rechteckige und/oder polygonale Form aufweisen. Wiederkehrende Formen mit geraden Anlagekanten ermöglichen es die Flächenelemente in der ersten Stellung direkt in Anlage zueinander bringen zu können, auch ohne dass weitere Zwischenelemente oder Luftaustrittsöffnungen in der ersten Stellung bestehen oder notwendig sind. Als beispielhafte Ausführungsform können die Flächenelemente und auch die Oberflächenelemente dann eine hexagonale Form aufweisen. Diese lassen sich einfach in der ersten Stellung aneinander anbringen, ohne dass ein Spalt zwischen diesen besteht. Ferner können auch verschiedene Formen der Flächenelemente und der Oberflächenelemente miteinander kombiniert werden. Wichtig ist dabei, dass die Flächenelemente und die Oberflächenelemente in der ersten Stellung direkt aneinander anliegen, damit kein Luftdurchtritt möglich ist.

Die Belüftungseinrichtung ermöglicht das Bereitstellen einer Belüftung, ohne dass die Öffnungen der ersten Stellung der Flächenelemente, das heißt wenn diese nicht benötigt werden, sichtbar sind, die Luftaustrittsfläche kann daher komplett geschlossen werden. Weiterhin kann beispielsweise über die Trägerplatte, welche eine beliebige Form annehmen kann, die Oberfläche mit den Flächenelementen ebenfalls dreidimensional verformt werden. Entsprechend kann die Belüftungseinrichtung daher auch an Positionen, beispielsweise in einem Fahrgastraum, angeordnet werden, welche bisher für eine diffuse Belüftung nicht verwendet werden konnten. Da insbesondere die Luftausströmflächen im Fahrzeuginnenraum immer kleiner oder geringer verfügbar werden, bietet die Belüftungseinrichtung durch die Ausgestaltung die Bereitstellung von Belüftungseinrichtungen auf variablen Flächen. Zudem lässt sich die Belüftungseinrichtung in einem Spritzgussverfahren einfach herstellen, da der Verbund aus Flächenelementen als Spritzgussteil fertigbar ist.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Figuren

In den Zeichnungen zeigt:
- Fig. 1: eine perspektivische Darstellung einer Belüftungseinrichtung;
- Fig. 2: eine perspektivische Darstellung zweier Flächenelemente der Belüftungseinrichtung von Fig. 1, die über ein Verbindungselement miteinander verbunden sind;
- Fig. 3: eine perspektivische Darstellung eines Flächenelements der Belüftungseinrichtung von Fig. 1, welches an einem Rand angeordnet ist;
- Fig. 4: eine perspektivische Darstellung einer Vielzahl von Flächenelementen der Belüftungseinrichtung von Fig. 1 in einer zweiten Stellung zur Bereitstellung von Luftaustrittsöffnungen;
- Fig. 5: eine Draufsicht auf eine Trägerplatte der Belüftungseinrichtung von Fig. 1;
- Fig. 6: eine Rückansicht der Trägerplatte von Fig. 5;
- Fig. 7: eine perspektivische Darstellung eines als Rahmen ausgebildeten Gehäuseteils der Belüftungseinrichtung von Fig. 1;
- Fig. 8: eine perspektivische Darstellung von Einstellmitteln zum Verlagern der Flächenelemente der Belüftungseinrichtung von Fig. 1;
- Fig. 9: eine Draufsicht auf die Belüftungseinrichtung in einer ersten Stellung, in welcher die Flächenelemente eine geschlossene Oberfläche bereitstellen;
- Fig. 10: eine Draufsicht auf die Belüftungseinrichtung in der zweiten Stellung, in welcher die Flächenelemente zur Bildung von Luftaustrittsöffnungen beabstandet zueinander angeordnet sind;
- Fig. 11: einen Schnitt durch die Belüftungseinrichtung in der ersten Stellung; und
- Fig. 12: einen Schnitt durch die Belüftungseinrichtung in der zweiten Stellung.

In den Zeichnungen mit gleichen Bezugszeichen versehene Teile entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind.

### Ausführliche Beschreibung eines Ausführungsbeispiels

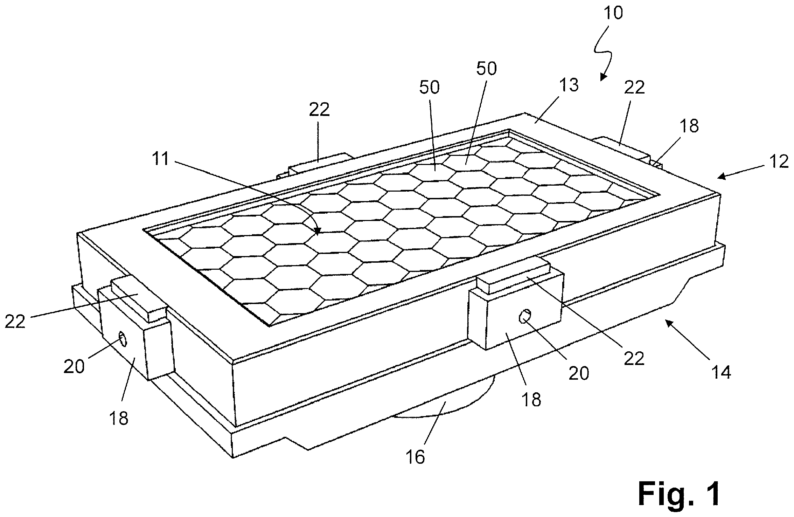

Fig. 1 zeigt eine perspektivische Darstellung einer Belüftungseinrichtung 10. Die Belüftungseinrichtung 10 weist in der nachfolgenden Figurenbeschreibung eine im Wesentlichen plane Luftaustrittsöffnung 11 auf. Die Belüftungseinrichtung 10 kann jedoch in Abhängigkeit der Ausbildung einer Trägerplatte 30 auch gekrümmte Konturen nachbilden und damit als 3D-Oberfläche ausgebildet sein.

Die Belüftungseinrichtung 10 ist in einem Fahrzeuginnenraum angeordnet. Beispielsweise befindet sich die Belüftungseinrichtung 10 im Bereich eines Fahrzeugarmaturenbretts, einer Seitenwandverkleidung oder im Bereich der A-, B- oder C-Säule. Die Belüftungseinrichtung 10 weist ein Gehäuse mit einem als Rahmen 12 ausgebildeten oberen Gehäuseteil und einem unteren Gehäuseteil 14 auf. Das Gehäuseteil 14 weist einen Anschluss 16 auf, über den Frischluft oder klimatisierte Luft von einer Fahrzeugklimaanlage über entsprechende Luftkanäle zugeführt wird.

An dem Rahmen 12 befinden sich Vorsprünge 22, über welche der Kopf von Schrauben 48 aufgenommen wird. Zusätzlich sind Deckel 18 vorgesehen, die mit den Vorsprüngen 22 verbunden sind und den Kopf der Schrauben 48 gegen ein Herausbewegen sichern. Über die Öffnungen 20 in den Deckeln 18 kann beispielsweise ein Antriebsstift mit einer entsprechenden Kontur in den Kopf der Schrauben 48 aufgenommen sein. Über die Schrauben 48 kann eine Bewegung von Flächenelementen 50 ausgeführt werden.

Der Rahmen 12 weist eine Blende 13 auf. Die Blende 13 umgibt die Luftaustrittsöffnung 11. Im Bereich der Luftaustrittsöffnung 11 ist eine Vielzahl von Flächenelementen 50 angeordnet. Die Flächenelemente 50 weisen an ihrer Oberseite ein Oberflächenelement 52 bzw. 62 auf. Die Oberflächenelemente 52 und 62 bilden die sichtbare Oberfläche im Bereich der Luftaustrittsöffnung 11. Fig. 1 zeigt eine erste Stellung der Flächenelemente 50. Hierbei liegen die Flächenelemente 50 direkt aneinander an, sodass kein Luftaustritt durch die Luftaustrittsöffnung 11 hindurch möglich ist.

In Abhängigkeit der Ausbildung der Oberflächenelemente 52 und 62 kann die geschlossene Oberfläche eine im Wesentlichen homogene Fläche bereitstellen. Dabei sind die Anlagekanten der Flächenelemente 50 nicht oder nur kaum sichtbar. Die Oberfläche kann auch Strukturen oder Formen aufweisen, wobei einzelnen Flächenelemente 50 über die Oberflächenelemente 52 und 62 ein entsprechendes Muster im geschlossenen Zustand der Belüftungseinrichtung 10, d. h. mit aneinander anliegenden Flächenelementen 50, ausbilden. Jedes einzelne der Oberflächenelemente 52 und 62 kann in solchen Ausführungen einen Teil eines Musters oder einer Struktur abbilden.

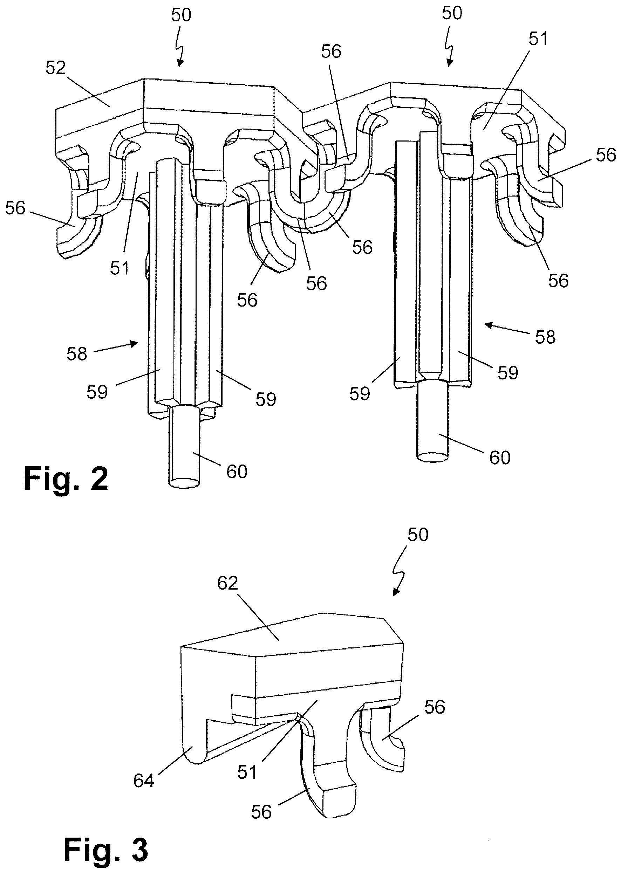

Fig. 2 zeigt eine perspektivische Darstellung zweier Flächenelemente 50 der Belüftungseinrichtung 10 von Fig. 1, die über ein Verbindungselement 56 miteinander verbunden sind. Die Flächenelemente 50 weisen jeweils eine Basis 51 auf, von der aus sich ein zweites flexibles Element 58 nach unten erstreckt. Das zweite flexible Element 58 weist einen Zapfen 60 auf, der in einer Öffnung 32 einer Trägerplatte 30 aufgenommen wird. Zusätzlich weist das zweite flexible Element 58 Leisten 59 auf. Die Leisten 59 dienen als Abstandselemente zwischen der Trägerplatte 30 und der Basis 51 der Flächenelemente 50. Von der Basis 51 erstrecken sich Verbindungselemente 56, über welche die Flächenelemente 50 miteinander verbunden sind. Die Verbindungselemente 56 werden nicht anschließend an die Basis 51 angebracht, sondern sind bereits bei der Herstellung an diesen angeformt. Zudem sind zwei Flächenelemente 50 nicht über jeweils ein Verbindungselement 56 miteinander verbunden, so wie dies die Darstellung von Fig. 2 für das mit zweimal dem gleichen Bezugszeichen versehene Verbindungselement 56 den Anschein macht, sondern über ein einzelnes Verbindungselement 56. Das Verbindungselement 56 wird bei der Herstellung eines Verbunds aus Flächenelementen 50 mit ausgebildet und verbindet daher gleich bei der Fertigstellung des Verbunds die beiden Flächenelemente 50.

Fig. 2 zeigt nur beispielshaft zwei einzelne Flächenelemente 50, die miteinander verbunden sind. Das linke Flächenelement 50 weist in der Darstellung von Fig. 2 zusätzlich ein Oberflächenelement 52 auf. Das Oberflächenelement 52 kann beispielsweise in einem Zwei-Komponenten-Spritzgießverfahren direkt an die Basis 51 angeformt werden. Die Basis 51, die Verbindungselemente 56 sowie die zweiten flexiblen Elemente 58 bestehen aus einem flexiblen Kunststoff, der elastisch ausgebildet ist. Daher können sowohl die Verbindungselemente 56 gedehnt und gestaucht als auch die zweiten flexiblen Elemente 58 geknickt, gedreht und ebenfalls gestaucht oder gedehnt werden. Zudem kann die Basis 51 gedehnt und gestaucht werden. Da aber zur Bereitstellung einer geschlossenen Oberfläche eine solche Verformung nicht erwünscht ist, ist ein Oberflächenelement 52 bzw. 62 auf jeweils einer Basis 51 aufgebracht, wobei die Oberflächenelemente 52 und 62 unflexibel ausgebildet sind. Diese können daher nicht verformt werden und weisen im Betrieb der Belüftungseinrichtung 10 stets ihre vorgegebene Form auf. In einer ersten Stellung, in welcher die Flächenelemente 50 aneinander anliegen, bestehen daher keine Luftspalte zwischen zwei Flächenelementen 50.

Die zweiten Flächenelemente 52 und 62 sind hierzu aus einem deutlich härteren Kunststoffmaterial in einem Zwei-Komponenten-Spritzgießverfahren auf die Basis 51 aufgebracht. Anstelle eines sogenannten 2K-Verfahrens können auch ein Verkleben oder ein Verschweißen, beispielsweise mittels Wärmeeintrag, erfolgen, um die Oberflächenelemente 52 und 62 auf die Basis 51 der Flächenelemente 50 aufzubringen.

Fig. 3 zeigt eine perspektivische Darstellung eines Flächenelements 50 der Belüftungseinrichtung von Fig. 1, welches an einem Rand angeordnet ist. Das Flächenelement 50 weist deutlich weniger Verbindungsstellen mit weiteren Flächenelementen 50 auf. Zudem ist das Oberflächenelement 62 anders ausgebildet als das Oberflächenelement 52 und weist einen Abschnitt mit einem Rand 64 auf. Das Oberflächenelement 62 ist aus einem härteren Material gebildet und kann daher nicht verformt werden. Entsprechend weist der Rand 64 eine starre Form auf. Über den Rand 64 wirken Einstellmittel auf einen Verbund aus Flächenelementen 50, wobei hierüber ein auseinanderziehen bzw. Schieben und Drücken der Flächenelemente 50 erfolgt.

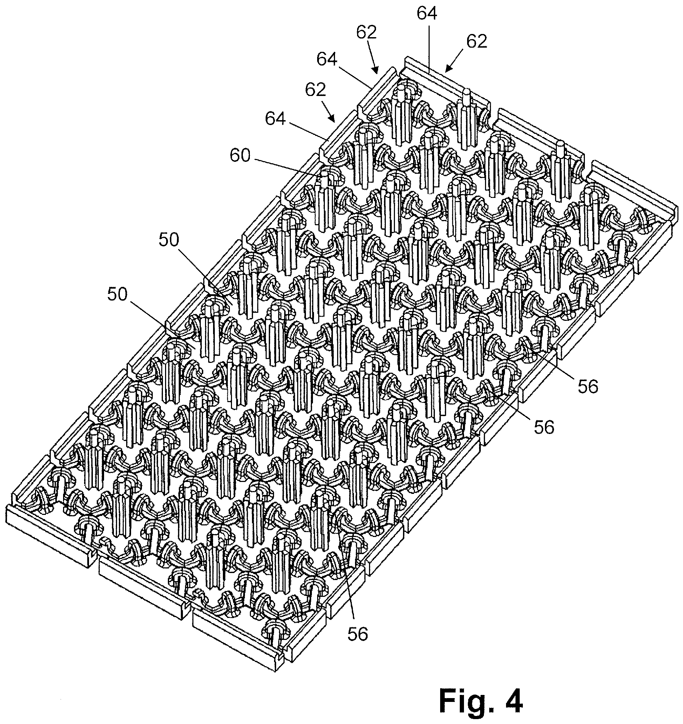

Fig. 4 zeigt eine perspektivische Darstellung einer Vielzahl von Flächenelementen 50 der Belüftungseinrichtung 10 von Fig. 1 in einer zweiten Stellung zur Bereitstellung von Luftaustrittsöffnungen. Fig. 4 zeigt einen Verbund aus Flächenelementen 50 oder eine sogenannte "Hexagonmatte". Diese Hexagonmatte besteht aus einer Vielzahl von Flächenelementen 50, die über die Verbindungselemente 56 miteinander verbunden sind. Eine solche Matte wird in einem Spritzgussprozess hergestellt. Daher lässt sich die Matte in hoher Stückzahl einfach und kostengünstig herstellen. Ferner lassen sich in einem Zwei-Komponenten-Spritzgussverfahren auch die Oberflächenelemente 52 und 62 gleich mit ausbilden, sodass die Flächenelemente 50 gleich ihre harten unflexiblen Oberflächenelemente aufweisen.

Die Darstellung von Fig. 4 zeigt, dass die Hexagonmatte rechteckig ausgebildet ist, wobei über die Oberflächenelemente 62 an jeder Seite des Rechtecks Ränder 64 angeordnet sind. Über die Ränder 64 kann die Hexagonmatte über Einstellmittel auseinandergezogen oder zusammengedrückt werden. Hierbei werden entweder die Flächenelemente 50 voneinander wegbewegt, wobei diese über die flexiblen Verbindungselemente 56 weiterhin zusammengehalten werden, als auch wieder zusammengedrückt, wobei ein Abstand zwischen den Flächenelementen 50 geschlossen wird. Fig. 4 zeigt den zweiten Zustand, in welchem die Flächenelemente 50 beabstandet zueinander sind. Dies ist auch über die Lücken zwischen den Rändern 64 ersichtlich. Um eine solche Verformung der Hexagonmatte zu erreichen, muss sowohl in Längs- als auch in Querrichtung der Matte ein Auseinanderziehen erfolgen. Hierzu weist die Belüftungseinrichtung 10 jeweils gegenüberliegende Lamellen 40 auf, die mit den Rändern 64 in Verbindung stehen und verschwenkbar gelagert sind.

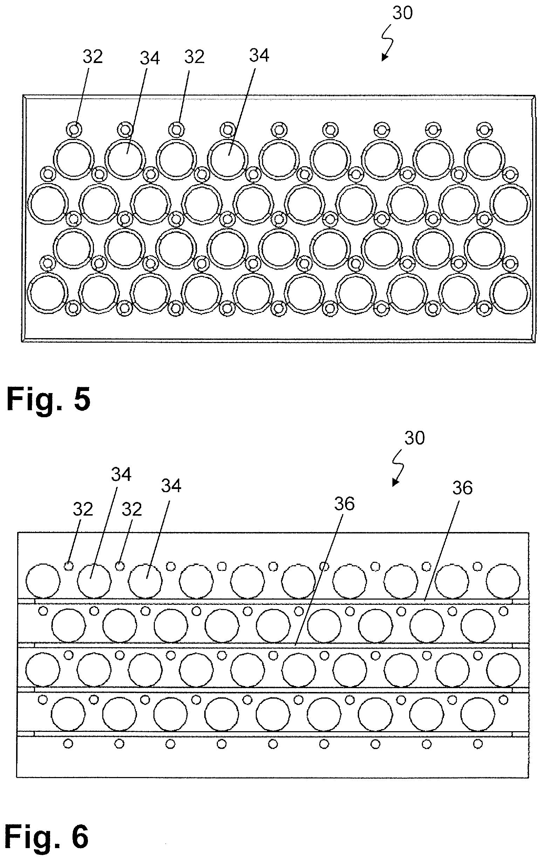

Fig. 5 zeigt eine Draufsicht auf eine Trägerplatte 30 der Belüftungseinrichtung 10 von Fig. 1. Fig. 5 zeigt den Blick auf die Trägerplatte 30 ausgehend von den Flächenelementen 50. Die Trägerplatte 30 weist eine Vielzahl von Öffnungen 32 auf. In die Öffnungen 32 werden die Zapfen 60 der zweiten flexiblen Elemente 58 der Flächenelemente 50 eingesetzt. Die Flächenelemente 50 weisen hierüber und über die Leisten 59 damit einen definierten Abstand zu der Trägerplatte 30 auf. Die Trägerplatte 30 kann beispielsweise eine dreidimensionale Form annehmen, wobei aufgrund der flexiblen Ausgestaltung der zweiten flexiblen Elemente 58, der Basis 51 und den Verbindungselementen 56 der Flächenelemente 50 diese der Kontur der Trägerplatte 30 folgen. Eine geschlossene relativ harte Oberfläche wird über die Oberflächenelemente 52 und 62 bereitgestellt.

Über die Öffnungen 34 gelangt Frischluft oder klimatisierte Luft zu den Flächenelementen 50, die in der zweiten Stellung beabstandet zueinander angeordnet sind, sodass ein diffuser Luftstrom dazwischen austreten kann. Den Öffnungen 34 wird Frischluft oder klimatisierte Luft über den Anschluss 16 des unteren Gehäuseteils 14 zugeführt.

Fig. 6 zeigt eine Rückansicht der Trägerplatte 30 von Fig. 5. Die Trägerplatte 30 weist an ihrer Rückseite Leisten 36 auf. Die Leisten 36 können der Trägerplatte 30 eine erhöhte Stabilität verleihen.

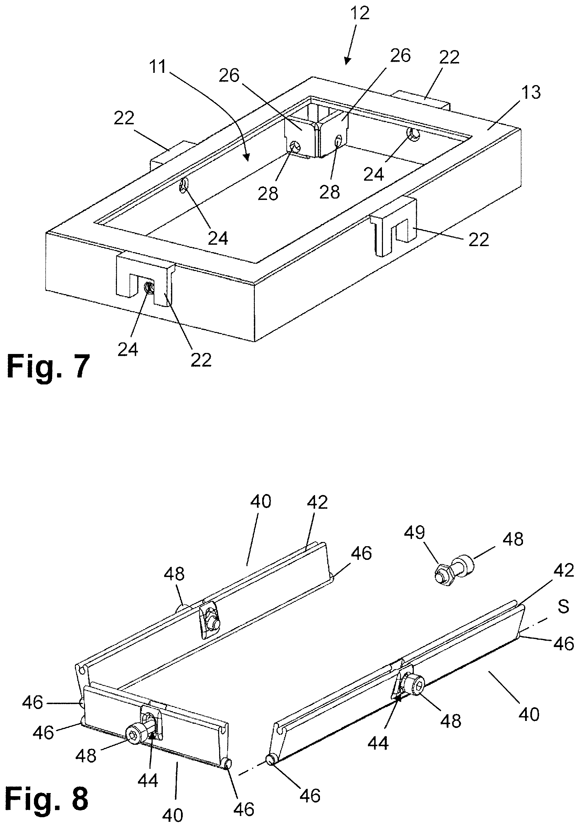

Fig. 7 zeigt eine perspektivische Darstellung eines als Rahmen 12 ausgebildeten Gehäuseteils der Belüftungseinrichtung 10 von Fig. 1. Der Rahmen weist an den gegenüberliegenden Bereichen der Vorsprünge 22 Öffnungen 24 auf. Über die Öffnungen 24 ragen Gewindeabschnitte der Schrauben 48 in den Innenraum und sind mit den Lamellen 40 (siehe Fig. 8) gekoppelt. Die Lamellen 40 sind über Zapfen 46 in Öffnungen 28 in Wänden 26 verschwenkbar gelagert. Die Wände 26 sind an den Innenwänden des Rahmens angeordnet.

Fig. 8 zeigt eine perspektivische Darstellung von Einstellmitteln zum Verlagern der Flächenelemente 50 der Belüftungseinrichtung 10 von Fig. 1. Die Lamellen 40 sind über die Lagerzapfen 46 verschwenkbar in den Öffnungen 28 der Wände 26 aufgenommen. Die Lamellen 40 weisen weiter eine Nut 42 auf, die sich entlang der Lamellen 40 an deren Oberseite erstreckt. In der Nut 42 sind die Ränder 64 der Oberflächenelemente 62 aufgenommen. In Abhängigkeit der Position der Lamellen 40 werden daher die Flächenelemente 50 über die Ränder 64 der Oberflächenelemente 62 auseinander bewegt oder zusammengedrückt. Hierzu werden die Lamellen 40 um die Schwenkachse S, die durch die Lagerzapfen 46 verläuft, verschwenkt.

Die Lamellen 40 weisen zudem eine Aufnahme 44 auf, in welcher eine Mutter 49 aufgenommen ist. Die Mutter 49 ist innerhalb der Aufnahme 44 aufgenommen und kann daher nicht aus der Aufnahme 44 herausbewegt werden. Die Aufnahme 44 weist dementsprechend Öffnungen für die Schraube 48 auf. Die Schraube 48 und die Mutter 49 weisen ein korrespondierendes Gewinde auf, sodass ein Verdrehen der Mutter 48 zu einem Verschwenken der Lamellen 40 führt. Je nachdem wie die Lamellen 40 verschwenkt werden, werden damit die Flächenelemente 50 aufeinander zu oder voneinander weg bewegt.

Fig. 8 zeigt nur ein Paar gegenüberliegende Lamellen 40 sowie eine einzelne Lamelle 40, wobei deren gegenüberliegende Lamelle 40 nicht dargestellt ist. Diese Lamelle 40 ist aus Gründen der Übersichtlichkeit nicht dargestellt, um die Ausbildung der Schraube 48 mit der Mutter 49 darzustellen.

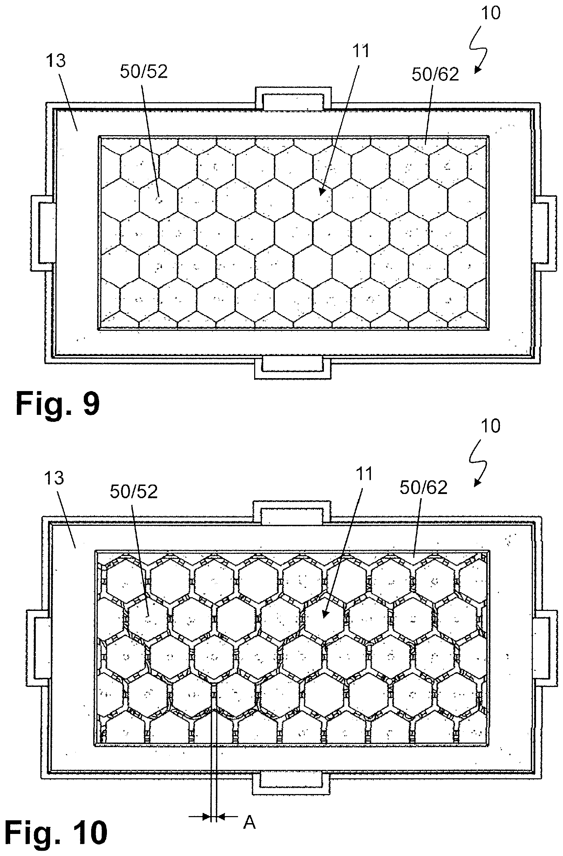

Fig. 9 zeigt eine Draufsicht auf die Belüftungseinrichtung 10 in einer ersten Stellung, in welcher die Flächenelemente 50 eine geschlossene Oberfläche bereitstellen.

Fig. 10 zeigt eine Draufsicht auf die Belüftungseinrichtung 10 in der zweiten Stellung, in welcher die Flächenelemente 50 zur Bildung von Luftaustrittsöffnungen beabstandet zueinander angeordnet sind.

In der ersten Stellung (Fig. 9) liegen die Flächenelemente 50 direkt aneinander an. Daher kann kein Luftaustritt über die Luftaustrittsöffnung 11 erfolgen. Soll eine Belüftung über die Luftaustrittsöffnung 11 erreicht werden, so werden die Lamellen 40 verschwenkt, was zu einem Auseinanderziehen der Flächenelemente 50 führt. Durch die flexiblen Verbindungselemente 56 wird der Verbund aus Flächenelementen 50 bzw. die Hexagonmatte nicht beschädigt. Zudem wird eine Spannung zwischen den Flächenelementen 50 aufrechterhalten, sodass diese aus ihrer nunmehr aufgenommenen Position nicht einfach verlagert werden können. Werden die Lamellen 40 zurückbewegt, um die Luftaustrittsöffnung zu verschließen, unterstützen die flexiblen Verbindungselemente 56 aufgrund ihrer elastischen Ausbildung das Zusammenführen der Flächenelemente 50 und damit das Verschließen der Luftaustrittsöffnung 11.

In Abhängigkeit der Stellung der Lamellen 40 können größere Abstände A zwischen den Flächenelementen 50 oder kleinere Abstände A erreicht werden. In Abhängigkeit der Ausbildung und Dimensionierung der Belüftungseinrichtung 10 sowie der Einstellmittel zum Auseinanderziehen und Zusammenschieben der Flächenelemente 50 können relativ große Abstände A realisiert werden. Jedoch ist dabei stets zu berücksichtigen, welches Material für die Flächenelemente 50 und die Verbindungselemente 56 verwendet worden ist und wie stark die Flexibilität dieser im Betrieb über einen langen Zeitraum hinweg ist. In der Regel werden die Abstände A eine maximale Abstandsweite von wenigen Millimetern nicht übersteigen.

In weiteren Ausführungsformen können Beleuchtungseinrichtungen vorgesehen sein, welche den Raum hinter den Flächenelementen 50 illuminieren. In der geschlossenen Stellung der Flächenelemente 50 dringt kein Licht nach außen, sofern die Flächenelemente 50 nicht transparent sind. Werden die Flächenelemente 50 jedoch voneinander wegbewegt, so kann über die zwischen den Flächenelementen 50 gebildeten Luftaustrittsspalte eine Beleuchtung entsprechend dem Muster und der Ausbildung der Flächenelemente 50 erfolgen.

Die Flächenelemente der Belüftungseinrichtung 10 weisen in diesem Ausführungsbeispiel eine hexagonale Form auf. Lediglich die Flächenelemente 50 am Rand weisen eine andere Form auf, wobei die Anlagebereiche entsprechend der hexagonalen Form der übrigen Flächenelemente 50 ausgebildet sind. Anstelle einer solchen Wabenstruktur können auch andere Strukturen erzeugt werden.

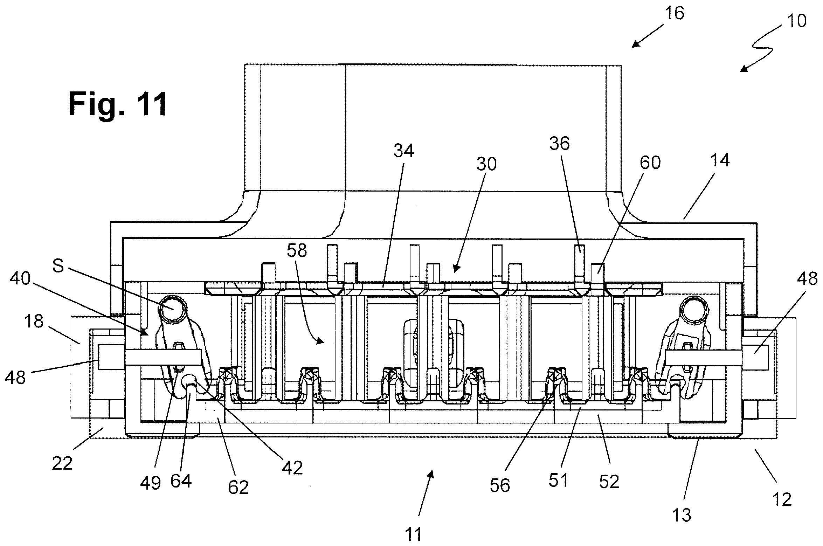

Fig. 11 zeigt einen Schnitt durch die Belüftungseinrichtung 10 in der ersten Stellung der Flächenelemente 50. Die Lamellen 40 befinden sich hierzu ebenfalls in einer ersten Stellung. Wie dargestellt, sind die Ränder 64 in der Nut 42 aufgenommen. Die Flächenelemente 50 liegen direkt aneinander an und stellen damit eine geschlossene Oberfläche bereit.

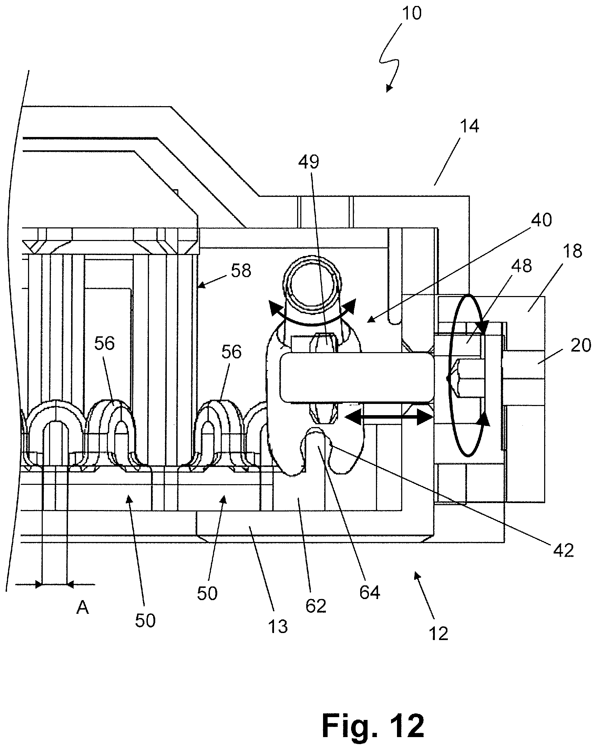

Fig. 12 zeigt einen Schnitt durch die Belüftungseinrichtung 10 in der zweiten Stellung der Flächenelemente 50. Um die Flächenelemente 50 in die zweite Stellung zu verbringen, wird die Schraube 48 in Richtung des Pfeils verdreht. Dies führt zu einer Verlagerung der Mutter 49 in der Aufnahme 44 der Lamelle 40 entlang der Richtung des Pfeils. Entsprechend der Drehrichtung der Schraube 48 erfolgt daher eine Verlagerung der Mutter 49 in Zeichnungsrichtung nach links oder nach rechts. Wird die Mutter 49 nach rechts verlagert, so führt dies zu einem Verschwenken der Lamelle 40 um die Schwenkachse S wie über den Pfeil angedeutet. Beim Öffnen der Luftaustrittsöffnung 11 über die Flächenelemente 50 erfolgt in der Darstellung von Fig. 12 ein Verschwenken nach rechts. Die Ränder 64 der Oberflächenelemente 62, die mit Flächenelementen 50 verbunden sind werden über die Nut 42 ebenfalls nach rechts verlagert. Dies führt zu einem Auseinanderziehen der Flächenelemente 50, sodass zwischen den benachbarten Flächenelementen 50 ein Abstand A bereitgestellt wird. Über diesen Abstand kann dann über den Anschluss 16 zugeführte Luft austreten.

In Abhängigkeit der Position der Mutter 49 werden die Lamellen 40 verschwenkt und dabei die Flächenelemente 50 auseinandergezogen oder zusammengedrückt. Die flexiblen Verbindungselemente 56 ermöglichen eine derartige Verlagerung der Flächenelemente 50 zueinander, ohne dass es zu einer Beschädigung kommt. Zudem unterstützen die flexiblen Verbindungselemente 56 ein Zusammenziehen der Flächenelemente 50.

Eine Belüftungseinrichtung 10 mit einem solchen Verbund von Flächenelementen 50 bzw. einer solchen Hexagonmatte ist einfach herzustellen und ermöglicht eine Anpassung an verschiedene Oberflächen. Die Bereitstellung einer Hexagonmatte in einem Spritzgussprozess lässt diese in hoher Stückzahl kostengünstig herstellen, ohne dass auf generative Fertigungsverfahren zurückgegriffen werden muss.

### Bezugszeichenliste

- 10: Belüftungseinrichtung
- 11: Luftaustrittsöffnung
- 12: Rahmen
- 13: Blende
- 14: unteres Gehäuseteil
- 16: Anschluss
- 18: Deckel
- 20: Öffnung
- 22: Vorsprung
- 24: Öffnung
- 26: Wand
- 28: Öffnung
- 30: Trägerplatte
- 32: Öffnung
- 34: Öffnung
- 36: Leiste
- 40: Lamelle
- 42: Nut
- 44: Aufnahme
- 46: Lagerzapfen
- 48: Schraube
- 49: Mutter
- 50: Flächenelement
- 51: Basis
- 52: Oberflächenelement
- 54: Oberseite
- 56: Verbindungselement
- 58: zweites Element
- 59: Leiste
- 60: Zapfen
- 62: Oberflächenelement
- 64: Rand
- A: Abstand
- S: Schwenkachse

## Patentansprüche

1. Belüftungseinrichtung, aufweisend Flächenelemente (50), die in einer ersten Stellung aneinander anliegen, um eine geschlossene Oberfläche bereitzustellen, und in einer zweiten Stellung beabstandet zueinander angeordnet sind, um Luftaustrittsöffnungen zu bilden, **dadurch gekennzeichnet, dass**
- die Flächenelemente (50) über flexible Verbindungselemente (56) miteinander verbunden sind,
- die Flächenelemente (50), welche an den Rändern angeordnet sind, mit Einstellmitteln verbunden sind, und
- die Einstellmittel derart beweglich ausgebildet und angeordnet sind, dass über die Einstellmittel sämtliche Flächenelemente (50) in die zweite Stellung bringbar sind.

2. Belüftungseinrichtung nach Anspruch 1, wobei die Flächenelemente (50) an ihrer Rückseite, der Oberfläche abgewandt, zweite flexible Elemente (58) aufweisen, die mit einer Trägerplatte (30) verbunden sind.

3. Belüftungseinrichtung nach Anspruch 2, wobei die Trägerplatte (30) erste Öffnungen (32) für die zweiten flexiblen Elemente (58) und zweite Öffnungen (34) für durchströmende Luft aufweist.

4. Belüftungseinrichtung nach einem der Ansprüche 1 bis 3, wobei die Einstellmittel verschwenkbar gelagerte Lamellen (40) oder verschiebbar gelagerte Leisten aufweisen, die über Antriebseinrichtungen verlagerbar sind.

5. Belüftungseinrichtung nach Anspruch 4, wobei die Antriebseinrichtungen manuell oder motorisch antreibbar sind.

6. Belüftungseinrichtung nach einem der Ansprüche 1 bis 5, wobei die Flächenelemente (50) an ihrer der Oberfläche zugewandten Seite ein gegenüber den flexiblen Verbindungselementen (56) härteres Oberflächenelement (52; 62) aufweisen.

7. Belüftungseinrichtung nach einem der Ansprüche 1 bis 6, wobei die Flächenelemente (50) mit den Verbindungselementen (56) und/oder den zweiten flexiblen Elementen (58) in einem Spritzgussverfahren hergestellt sind.

8. Belüftungseinrichtung nach Anspruch 6, wobei die Oberflächenelemente (52; 62) auf die Flächenelemente (50) in einem 2-Komponenten-Spritzgussverfahren, mittels eines Klebstoffs oder mittels Wärmeeintrag aufgebracht sind.

9. Belüftungseinrichtung nach einem der Ansprüche 1 bis 8, aufweisend mindestens eine Beleuchtungseinrichtung, welche hinter oder unter den Flächenelementen (50) angeordnet ist.

10. Belüftungseinrichtung nach einem der Ansprüche 1 bis 9, wobei die Flächenelemente (50) eine hexagonale, rechteckige und/oder polygonale Form aufweisen.

## Claims

1. Ventilating device comprising flat elements (50) which in a first setting bear against one another in order to provide a closed surface and in a second setting are arranged at a spacing from one another in order to form air outlet openings, **characterised in that**
- the flat elements (50) are connected together by way of flexible connecting elements (56),
- the flat elements (50) which are arranged at the edges are connected with setting means and
- the setting means are constructed and arranged to be movable in such a way that all flat elements (50) can be brought into the second setting by way of the setting means.

2. Ventilating device according to claim 1, wherein the flat elements (50) have at the rear side thereof, which is remote from the surface, second flexible elements (58) which are connected with a support plate (30).

3. Ventilating device according to claim 2, wherein the support plate (30) has first openings (32) for the second flexible elements (58) and second openings (34) for air flowing through.

4. Ventilating device according to any one of claims 1 to 3, wherein the setting elements comprise pivotably mounted slats (40) or displaceably mounted strips, which are movable by way of drive devices.

5. Ventilating device according to claim 4, wherein the drive devices are drivable manually or by motor.

6. Ventilating device according to any one of claims 1 to 5, wherein the flat elements (50) have at the side thereof facing the surface a surface element (52; 62) which is harder by comparison with the flexible connecting elements (56).

7. Ventilating device according to any one of claims 1 to 6, wherein the flat elements (50) are produced in an injecting-moulding method together with the connecting elements (56) and/or the second flexible elements (58).

8. Ventilating device according to claim 6, wherein the surface elements (52; 62) are mounted the flat elements (50) in a two-component injection-moulding method, by means of an adhesive or by means of induction of heat.

9. Ventilating device according to any one of claims 1 to 8, comprising at least one lighting device arranged behind or below the flat elements (50).

10. Ventilating device according to any one of claims 1 to 9, wherein the flat elements (50) have a hexagonal, rectangular and/or polygonal form.

## Revendications

1. Dispositif d'aération, présentant des éléments plans (50), qui s'appliquent les uns contre les autres dans une première position afin de présenter une surface fermée, et sont agencés espacés les uns des autres dans une seconde position afin de former des ouvertures de sortie d'air, **caractérisé en ce que**
- les éléments plans (50) sont reliés les uns aux autres par le biais d'éléments de liaison souples (56),
- les éléments plans (50) agencés au niveau des bords, sont reliés à des moyens de réglage, et
- les moyens de réglage sont réalisés mobiles et agencés de sorte que tous les éléments plans (50) peuvent être amenés dans la seconde position par le biais des moyens de réglage.

2. Dispositif d'aération selon la revendication 1, dans lequel les éléments plans (50) présentent au niveau de leur face arrière, opposée à la surface, deux éléments souples (58), qui sont reliés à une plaque de support (30).

3. Dispositif d'aération selon la revendication 2, dans lequel la plaque de support (30) présente des premières ouvertures (32) pour les seconds éléments souples (58) et des secondes ouvertures (34) pour l'air traversant.

4. Dispositif d'aération selon l'une quelconque des revendications 1 à 3, dans lequel les moyens de réglage présentent des lamelles logées de manière pivotante (40) ou des baguettes logées de manière coulissante, qui sont déplaçables par le biais de dispositifs d'entraînement.

5. Dispositif d'aération selon la revendication 4, dans lequel les dispositifs d'entraînement peuvent être entraînés manuellement ou par moteur.

6. Dispositif d'aération selon l'une quelconque des revendications 1 à 5, dans lequel les éléments plans (50) présentent au niveau de leur face tournée vers la surface un élément de surface (52 ; 62) plus dur que les éléments de liaison souples (56).

7. Dispositif d'aération selon l'une quelconque des revendications 1 à 6, dans lequel les éléments plans (50) avec les éléments de liaison (56) et/ou les seconds éléments souples (58) sont fabriqués dans un procédé de moulage par injection.

8. Dispositif d'aération selon la revendication 6, dans lequel les éléments de surface (52 ; 62) sont montés sur les éléments plans (50) dans un procédé de moulage par injection à 2 composants, au moyen d'un adhésif ou par apport de chaleur.

9. Dispositif d'aération selon l'une quelconque des revendications 1 à 8, présentant au moins un dispositif d'éclairage, lequel est agencé derrière ou sous les éléments plans (50).

10. Dispositif d'aération selon l'une quelconque des revendications 1 à 9, dans lequel les éléments plans (50) présentent une forme hexagonale, rectangulaire et/ou polygonale.
